# FASCICULE DE BREVET EUROPEEN

(11) **EP 2 366 497 B1**
(45) Date de publication et mention de la délivrance du brevet: **20.03.2013**
(21) Numéro de dépôt: 11150520.2
(22) Date de dépôt: 10.01.2011
(51) Int. Cl.: B24B 27/00, B24B 21/16, B24B 41/06, B23Q 1/54

(54) **Machine d'usinage et de terminaison**
Grob- und Feinbearbeitungsmaschine
Machining and finishing machine

(30) Priorité: 15.03.2010 CH 3562010
(43) Date de publication de la demande: 21.09.2011
(73) Titulaire: Crevoisier SA, 2714 Les Genevez (CH)
(72) Inventeur: Barraud, Michael, 2714 Les Genevez (CH); Crevoisier, Philippe, 2714 les Genevez (CH); Jäkel, Fréderic, 2800 Délemont (CH); Sauvain, Régis, 2873 Saulcy (CH)
(74) Mandataire: P&TS SA (AG, Ltd.)

(56) Documents cités:
- EP-A1- 0 123 433
- EP-A1- 1 935 564

## Description

### Domaine technique

La présente invention concerne une machine de terminaison à plusieurs axes commandée par CNC.

### Etat de la technique

Lors de la fabrication et de l'usinage des pièces métalliques, les opérations de terminaison visent notamment à modifier l'état de surface des pièces produites. La terminaison est un processus lent, effectué après l'usinage proprement dit, et nécessitant une multitude d'opérations successives de ponçage, de brossage, de feutrage, de satinage, lapidage etc. afin de donner à la pièce terminée l'état de surface métallique désiré. Dans la présente demande, les opérations d'ébavurage sont également considérées comme des exemples particuliers d'opérations de terminaison.

Les différentes opérations de terminaison mettent en oeuvre différents outils, par exemple différents disques ou rubans abrasifs, brosses, meules avec des grains variables. Les multiples machines de terminaison employées successivement pour terminer la surface externe d'une pièce complexe, par exemple une boîte de montre, un maillon de bracelet, des lunettes, un instrument d'écriture, etc., occupent donc une surface importante dans un atelier ou une manufacture. Par ailleurs, l'opérateur doit passer d'une machine à l'autre pour polir, meuler, brosser etc. les différentes parties d'une pièce avec outils avec des grains de plus en plus fins.

La demanderesse propose depuis plusieurs années des machines motorisées pour le meulage, satinage, polissage etc. Ces machines sont connues sous le nom de lapidaires, bonne à tout faire, machine à polir, machine pour la préparation, machine de terminaison et peuvent être équipées d'une grande variété d'outils de terminaison qui peuvent être remplacés rapidement. Les machines ne sont pas dotées de commandes numériques en sorte que l'opérateur doit effectuer tous les déplacements de pièce ou d'outil manuellement. Par ailleurs, il est nécessaire de démonter et de remonter manuellement les outils à chaque remplacement; cette opération, bien que facilitée par le système de fixation d'outil, nécessite un temps important.

DE4430113 décrit une machine d'usinage avec deux poupées et un revolver porte-outil destiné à des outils tournants ou à des outils de polissage. L'emploi d'un revolver permet de remplacer un outil entre deux opérations sans le démonter. La construction de cette machine ne permet cependant pas de monter des bandes de polissage ou d'autres outils très volumineux sur le revolver.

US3024575 décrit un appareil de polissage comportant une tourelle rotative munie de différents outils abrasifs. L'appareil n'est pas commandé numériquement. La pièce à terminer peut uniquement effectuer des mouvements simples, par exemple des rotations autour d'un seul axe parallèle à l'axe d'indexation de la tourelle. L'entraînement des différents outils se fait à l'aide de moteurs dédiés, chaque outil comportant son propre moteur. Les outils sont donc encombrants, coûteux, difficiles à câbler électriquement et difficiles à synchroniser entre eux.

FR2629747 décrit une machine de finissage de pièces moulées ou usinées comprenant une table tournante avec plusieurs broches porte-pièces. Un outil de finissage, par exemple une bande abrasive, permet de polir à tour de rôle les différentes pièces portées par la table. Cette machine est peu adaptée au finissage de pièces volumineuses ou compliquées qui ne peuvent pas être portées sur une table. La table ne comporte pas d'axe, hormis l'axe d'indexation, et ne permet pas de déplacement complexe de la pièce à terminer.

Une solution similaire à celle de FR2629747 est aussi décrite dans DE3442011.

EP1935564 décrit une machine de terminaison avec trois axes linéaires et trois axes de rotation.

Dans la fabrication de pièces métallique on est souvent confronté à des pièces avec une surface complexe non développable, soit des surfaces gauches génériques, par exemple des boites ou des carrures de montre, qui nécessitent une finition soignée. Ces surfaces ne peuvent pas être terminées de manière totalement automatique avec les machines connues, et leur terminaison comporte des opérations manuelles, ou plusieurs étapes de traitement automatiques, ou encore l'emploi de meules et outils spécialement adaptés à la surface, au détriment de la rapidité et de l'économie de production.

### Bref résumé de l'invention

Un but de la présente invention est notamment de proposer une machine de terminaison exempte des limitations des machines connues, et notamment de proposer une machine de terminaison permettant le traitement automatique de surfaces gauches quelconques.

Selon l'invention, ce but est atteint en particulier au moyen d'une machine d'usinage et de terminaison pour modifier l'état de surface de pièces usinées selon la revendication 1 et comportant une tourelle avec N postes pour fixer différents outils de terminaison. Des moyens motorisés commandés numériquement peuvent faire pivoter la tourelle, de manière à présenter un outil sélectionné parmi lesdits outils en regard d'une pièce à usiner. Une unité porte-pièce motorisée permet de présenter une pièce à terminer en regard de l'outil sélectionné. L'outil sélectionné et la pièce à usiner peuvent être déplacés l'un par rapport à l'autre selon au moins un axe linéaire ou plusieurs axes linéaires, contrôlés par une unité de commande CNC.

Par ailleurs, l'unité porte-pièces comporte au moins trois axes rotatifs motorisés et permettant une rotation continue de la pièce sous contrôle de l'unité de commande CNC.

Cette construction présente notamment l'avantage de permettre une présentation de la pièce à l'outil selon n'importe quelle orientation dans l'espace, et suivant n'importe quelle surface avec différents outils de terminaison, y compris des outils volumineux comme des bandes abrasives, sans devoir démonter les outils entre deux opérations successives et sans réclamer d'intervention de l'opérateur.

Au moins certains outils montés sur la tourelle sont entrainés par la tourelle, préférablement à l'aide de broches entrainées individuellement par des moteurs électriques (électro-broches). Cette solution permet d'éviter les vibrations qui seraient générées par un système de transmission et améliore la précision de l'usinage. On peut cependant aussi entrainer les outils à l'aide d'un moteur électrique commun ou d'un actuateur lié à la tourelle, évitant ainsi d'employer un moteur dédié pour chaque outil, ce qui permet de réduire le coût total et l'encombrement des outils.

L'usage d'une seule commande numérique pour commander à la fois les axes de l'unité porte-pièces et les axes de la tourelle respectivement des outils permet de synchroniser les différents déplacements et d'effectuer par exemple des mouvements d'interpolation impossibles à réaliser sans cette synchronisation.

### Brève description des dessins

Des exemples de mise en oeuvre de l'invention sont indiqués dans la description illustrée par les figures annexées dans lesquelles :
La figure 1 illustre une vue en perspective d'une machine de terminaison selon l'invention.
Les figures 2a, 2b, 3a, 3b, 3c, 3d, 3e illustrent des procédés de terminaison selon l'invention.
La figure 4 illustre une pince expansible coudée qui est utilisable dans la machine de l'invention, par exemple pour le finissage des carrures de montre.
La figure 5 montre un étau auto-centrant qui est utilisable dans la machine de l'invention, par exemple pour la terminaison des maillons de bracelet.

### Exemple(s) de mode de réalisation de l'invention

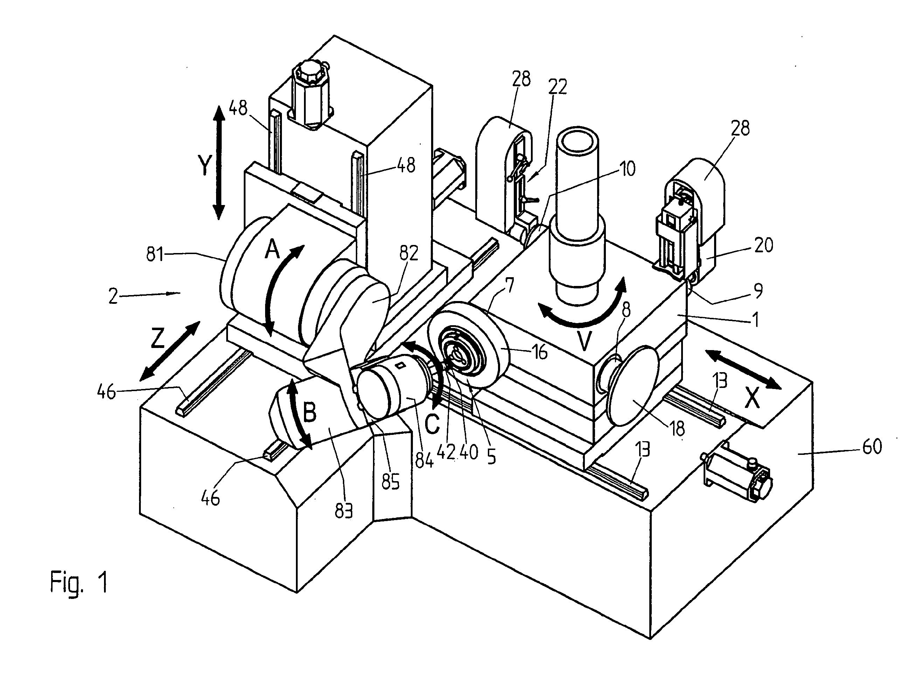

La machine illustrée à titre d'exemple sur la figure 1 comporte un châssis 60 avec une unité porte-outil à droite sur la figure et une unité porte-pièce 2 à gauche. Le châssis peut comporter un capot non illustré. L'unité porte-outil comporte essentiellement une tourelle 1 en rotation autour d'un axe V perpendiculaire au châssis, ici un axe vertical. La tourelle peut en outre coulisser par rapport au châssis selon un axe X sur une coulisse mettant en oeuvre des rails 13 et des vis à billes, ou tout autre système d'actuation approprié. Le coulissement selon l'axe X et le positionnement selon l'axe V sont gérés par une unité de contrôle CNC non représentée.

La tourelle comporte dans cet exemple quatre postes 7, 8, 9 et 10 permettant de monter jusqu'à quatre outils semblables ou différents. Des tourelles comportant un nombre de postes différents, par exemple six, huit ou plus, sont envisageables; l'espace angulaire entre les outils doit cependant être suffisant pour empêcher la collision entre des outils volumineux sur des postes voisins.

L'axe motorisé V permet de positionner la tourelle afin de présenter un outil sélectionné face à l'emplacement d'usinage 5 en regard de l'unité porte-pièce. Selon une variante, l'axe V est motorisé et indexé, permettant le positionnement à des positions angulaire prédéterminées et multiple d'un angle module, par exemple 1°.

Chaque poste 7, 8, 9, 10, comporte une broche ou un autre moyen d'entraînement de l'outil; la broche en regard de l'emplacement d'usinage 5 peut être entraînée en rotation au travers d'un mécanisme non illustré dans la tourelle.

Dans l'exemple illustré, la tourelle est munie des outils suivants :
■ Un premier disque abrasif 16 sur le poste 7, par exemple une meule, une brosse à satiner, un feutre, un disque abrasif monté sur un disque support en fonte ou en matériau synthétique, etc.
■ Un deuxième disque abrasif 18 sur le poste 8, par exemple un disque de type différent ou avec un grain différent.
■ Un premier dispositif 20 pour entraîner une bande (courroie) abrasive tendue entre deux (ou plusieurs) moyeux sur le poste 9. Les moyeux peuvent être constitués par de simples rouleaux en caoutchouc, un des moyeux étant entraîné directement par la broche (ou autre moteur). Le ponçage ou satinage ou polissage peut de préférence être effectué en appuyant la pièce contre une surface plane parallèle à l'axe de la broche, ou contre une surface courbée, derrière la bande en déplacement. Par ailleurs, la position verticale du moyeu supérieure par rapport au moyeu inférieure peut de préférence être ajustée manuellement afin de modifier l'encombrement et/ou le plan de la bande abrasive.
■ Un deuxième dispositif 22 pour entraîner une deuxième bande abrasive entre les deux moyeux 24 et 26 (ou plus) (poste 10).

D'autres types d'outils de terminaison non illustrés peuvent être montés sur les différents postes, y compris :
■ Un mandrin, par exemple un mandrin à serrage rapide auto-serrant, permettant de monter et de remplacer facilement des meules ou d'autres petits outils.
■ Un dispositif « entre-cornes » comportant une bande abrasive spécialement adaptée pour le polissage des boîtes de montre entre les deux cornes d'attache du bracelet.
■ Des brosses à satiner, feutres, tampons à polir, etc.

Les différents postes de la tourelle peuvent aussi être occupés par des outils permettant l'usinage de pièces semi-finies par enlèvement de matière, par exemple :
■ Une queue de rat pour limer ou travailler des ouvertures ou des portions concaves de la pièce.
■ Des meules de forme.
■ Des fraises de forme.
■ Des outils de coupe fixes, par exemple des burins ou des outils de tour, agissant sur la pièce entrainée en rotation par l'axe C.
■ Des diamants.
■ etc.

Les outils sont fixés sur les broches respectives de la tourelle manuellement ou automatiquement par des systèmes divers (exemple HSK©, cône ISO, nez Crevoisier, etc...). D'autres outils peuvent être montés à l'aide d'un axe directement vissé dans la broche. Selon une variante préférentielle, les broches des quatre postes 7, 8, 9, 10, sont entraînées par quatre moteurs électriques indépendants (électro-broches), dont la vitesse est déterminée par l'unité de contrôle CNC. On peut, cependant, imaginer aussi une variante de l'invention dans laquelle les outils sont entraînés par un moteur commun.

Optionnellement, la tourelle peut aussi inclure des dispositifs supplémentaires, par exemple des bandes abrasives, complètement indépendants des broches 7-10. Pour l'exécution de travaux complexes, la machine de l'invention peut être équipée d'un dispositif de changement automatique d'outils.

Selon un aspect indépendant de l'invention, la tourelle est équipée d'outils de terminaison, tels que des bandes, des meules etc., et aussi d'outils de coupe, par exemple de fraises, fraises de forme, burins, diamants, ou tout autre outil approprié. De cette manière, la machine de l'invention peut exécuter une suite complète d'opérations d'usinage et de terminaison à partir de pièces brutes ou semi-finies.

L'unité porte-pièce 2 permet essentiellement de présenter une pièce à usiner 40 en regard de l'outil sélectionné sur l'emplacement 5. Elle est montée sur une coulisse horizontale 46 selon l'axe Z (perpendiculaire à X) afin de se rapprocher ou de s'éloigner de l'unité porte-outil. Une coulisse verticale 48 en Y permet d'ajuster la distance entre la pièce et la base 60. L'outil sélectionné et la pièce à usiner 40 peuvent donc être déplacés l'un par rapport à l'autre selon trois axes linéaires orthogonaux motorisés X, Y et Z. Les coordonnées des déplacements selon ces axes sont lues par des encodeurs appropriés, par exemple des règles optiques, et transmises à l'unité de contrôle CNC.

Un axe de rotation motorisé horizontal A parallèle à l'axe X permet de faire tourner la pièce usinée afin de modifier l'angle d'attaque par rapport à l'outil. L'axe A est entraîné par un moteur 81, préférablement un moteur de type "direct drive" (entraînement direct). La rotation de l'axe A est mesurée en continu par un encodeur angulaire de précision, par exemple de type optique ou magnétique, et transmise à l'unité de contrôle CNC.

Une équerre 82, entrainée en rotation par l'axe A porte un second moteur 83, lequel pourrait être aussi du type "direct drive", ou bien comporter un réducteur. Le second moteur 83 actionne un second axe de rotation motorisé B. L'angle entre les axes A et B, par exemple 45°, est déterminé par l'équerre 82. La position de l'axe B est lue et transmise à l'unité de contrôle CNC, tout comme pour l'axe A.

Une deuxième équerre 85 et un troisième moteur 84 forment un troisième axe rotatif C. La position angulaire du troisième axe C est aussi lue directement par un encodeur accessible à l'unité de contrôle CNC. L'angle entre l'axe B et l'axe C est défini par l'équerre 85, par exemple 45°.

Le moteur 84 est capable de rotation continue. L'axe C est en ce cas un axe-broche de type « direct drive » contrôlé par CNC, permettant de positionner la pièce à terminer 40 à un angle quelconque, ou d'entraîner la pièce 40 en rotation a une vitesse déterminée par l'unité de contrôle, par exemple 2000 t/min. Cette modalité de fonctionnement est notamment utilisée pour la terminaison des pièces à symétrie de rotation, par exemple les fonds de montres, et pour les opérations de tournage.

Selon la nécessité, la machine peut aussi être liée à un palettiseur robotisé ou à un autre dispositif pour le chargement/déchargement automatique des pièces à usiner.

Selon une variante, non illustrée, l'axe C porte à son extrémité un outil de coupe, par exemple une fraise, ou un burin et est commandé par l'unité de contrôle CNC pour positionner l'outil à un angle défini ou pour l'entrainer en rotation avec une vitesse définie. Les broches 7-10 sur la tourelle équipées de mandrins ou de tout autre dispositif pour le maintien des pièces à usiner.

La disposition de trois axes de rotation A, B, C reliés par des équerres ayant un angle différents de 90°, par exemple de 45°, permet une réduction significative des dimensions et une amélioration de la rigidité et de la précision de la machine de l'invention.

Les angles et les dimensions des équerres 82 et 85 sont choisis de manière à ce que les axes de rotation A, B, C se croisent en un point dans l'espace. L'unité porte-pièce 2 est arrangée de manière à ce que le point commun des axes de rotation se trouve sur la pièce à usiner. Cette disposition minimise les mouvements des axes linéaires X, Y, Z lors de l'usinage.

La commande CNC permet en outre de préférence des mouvements d'interpolation, c'est-à-dire des déplacements de la pièce et/ou de l'outil au cours de l'usinage, et notamment des mouvements d'interpolation selon les trois axes rotatifs A, B, C et éventuellement aussi les trois axes linéaires X, Y, Z afin d'usiner des pièces complexes avec des surfaces non développables, par exemple des surfaces gauches quelconque. Préférablement, la machine de l'invention sera équipée d'outils spéciaux, dont la forme a été préalablement calculée en fonction de la surface à usiner.

L'unité porte-pièce est de préférence équipée d'un système de serrage de pièce interchangeable 42. Dans une variante préférentielle, la machine peut être équipée au choix d'une pince expansible automatique et d'un serre-pièce amovible de type Erowa (marque déposée), System 3R (marque déposée) ou similaire, ou d'un système de maintien par vacuum, ou actionnable manuellement, pour saisir la pièce usinée.

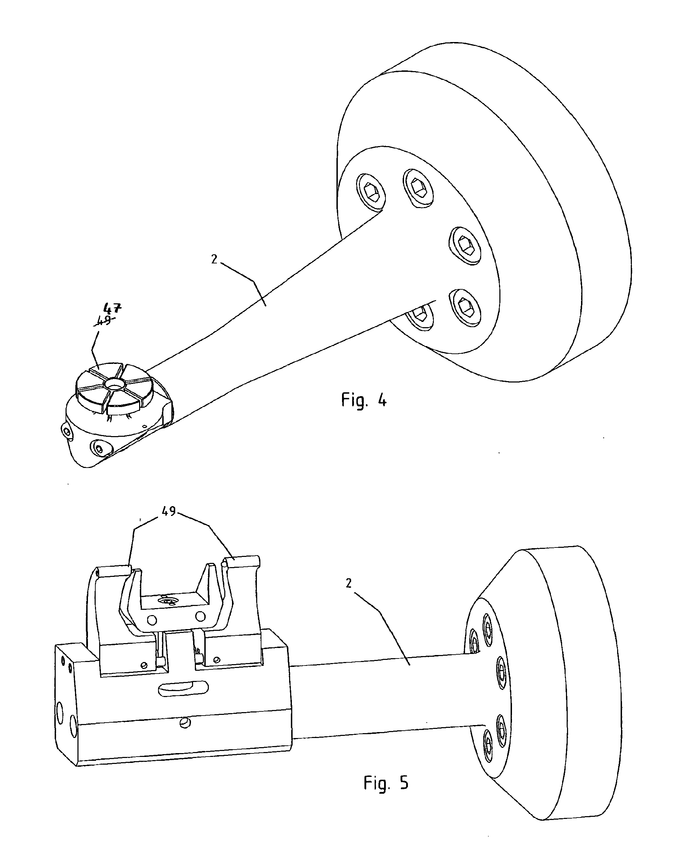

Selon une variante, illustrée par la figure 4, l'unité porte-pièces 2 est équipée d'une pince expansible coudée 49 permettant de saisir une pièce latéralement par rapport à l'axe C. Cette disposition permet l'accès à certaines surfaces de pièces complexes, par exemple les surfaces inférieures d'une carrure de montre.

La figure 5 illustre une autre variante du porte-pièces 2, comprenant un étau auto-centrant 47 automatique. Cette variante est utilisée, préférablement, pour le finissage des éléments de bracelet de montre. La machine illustrée sur la figure comporte un axe linéaire X sur l'unité porte-outils et deux axes linéaires Y et Z sur l'unité porte-pièces. D'autres répartitions sont possibles; il est par exemple possible de prévoir trois axes X, Y et Z du côté de l'unité porte-pièce, ou n'importe quelle répartition souhaitable en considérant toutefois qu'il est préférable d'éviter des déplacements fréquents des outils, beaucoup plus lourds et encombrants que la pièce.

D'autre part, la disposition illustrée peut aussi être tournée de 90° en mettant l'axe Z vertical et les axes X et Y dans un plan de bâti horizontal.

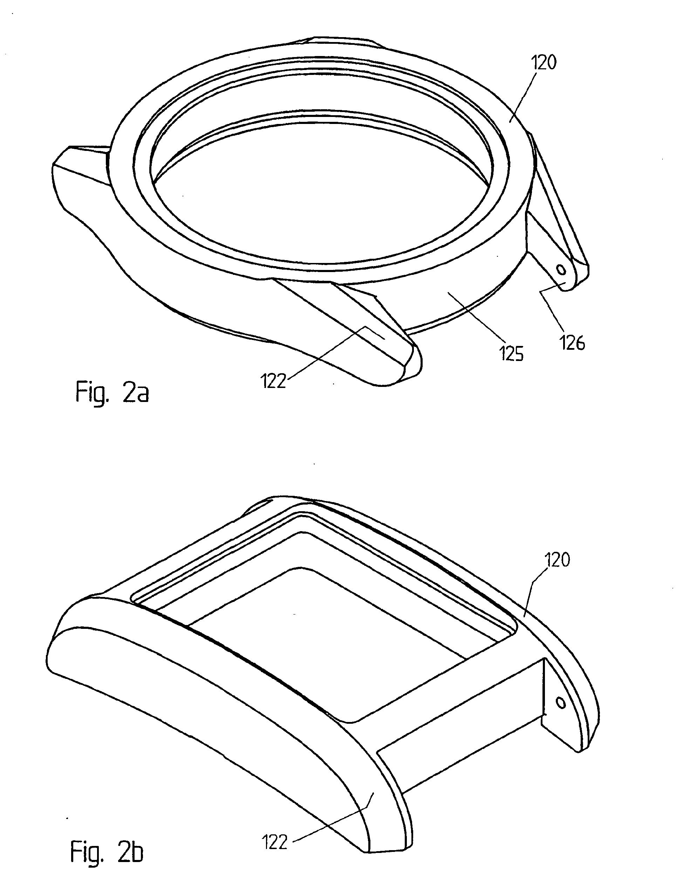

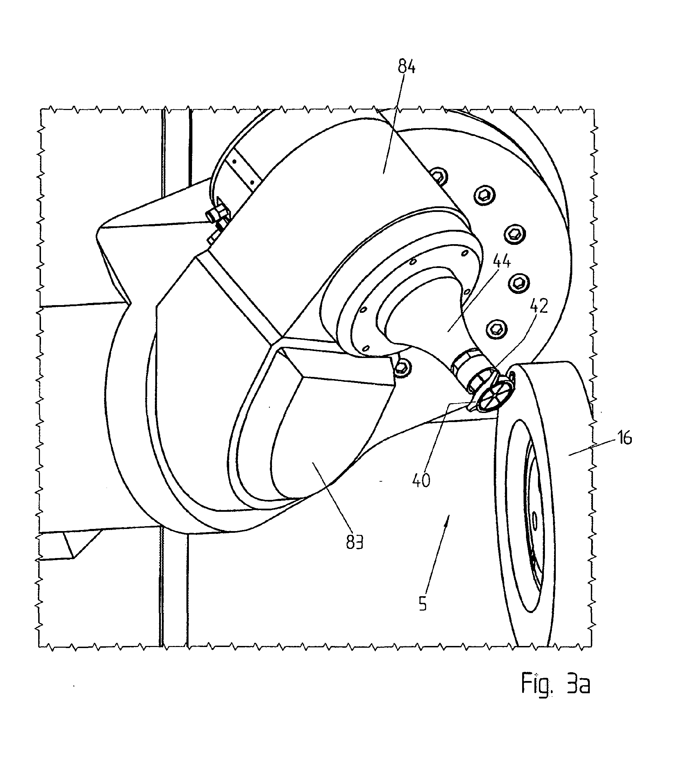

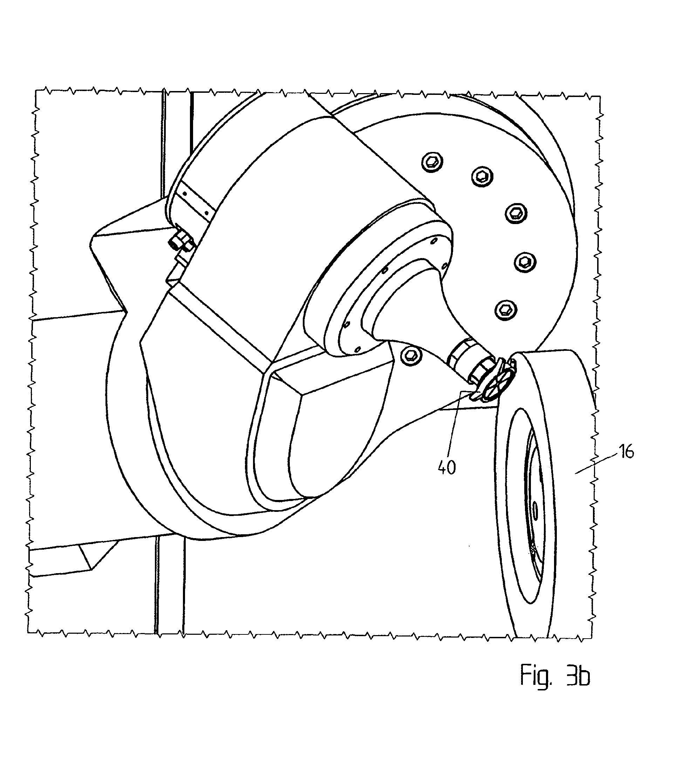

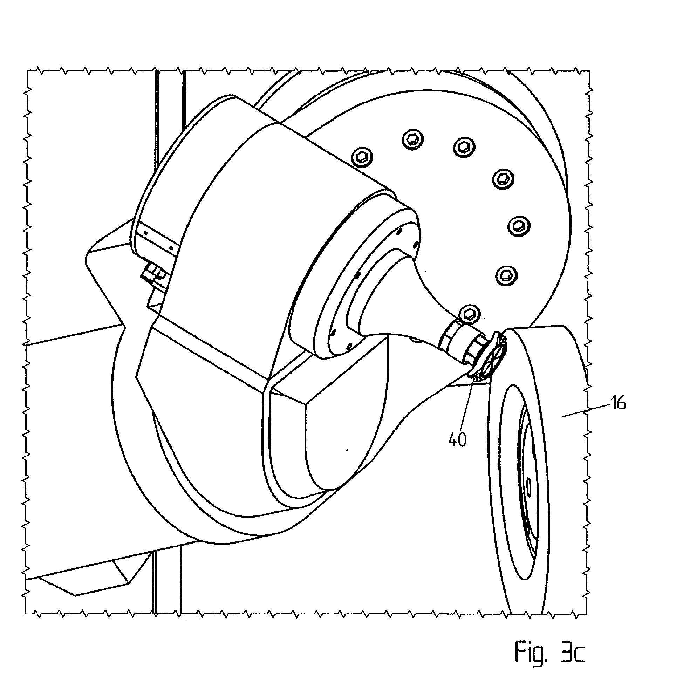

La machine de l'invention est particulièrement adapté à l'usinage et à la terminaison de pièces complexes et comportant des surfaces gauches quelconque, en particulier dans le domaine de l'horlogerie. Les figures 2a et 2b représentent par exemple des boites de montre-bracelet 120 comportant une surface gauche 122 et des surfaces entre les cornes 125 et 126. Les figures 3a, 3b, 3c, illustrent trois moments du meulage de la face 122 avec le dispositif de l'invention. Les axes A, B, C, X, Y, Z sont commandés par l'unité de contrôle CNC avec un procédé d'interpolation afin de présenter tous les points à usiner de la face 122 tangentiellement à la meule 16.

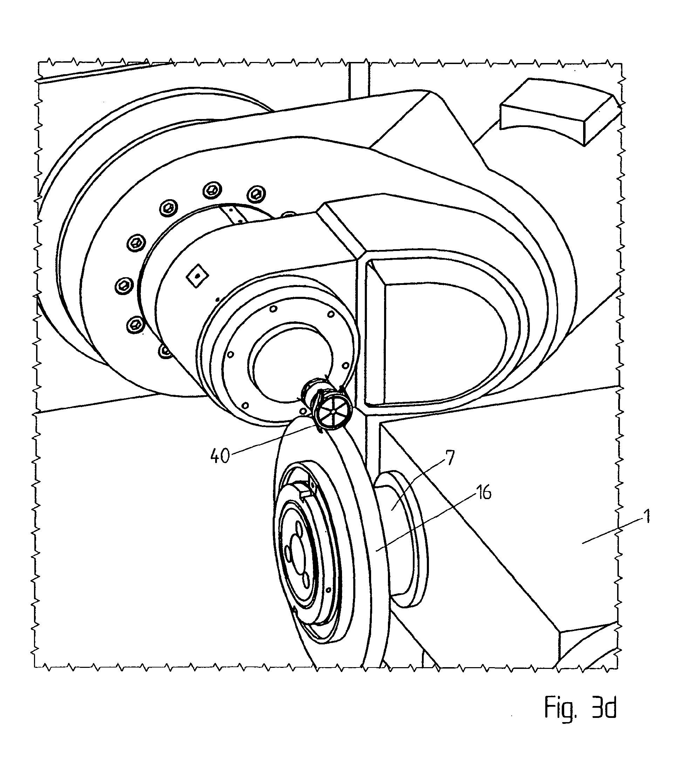

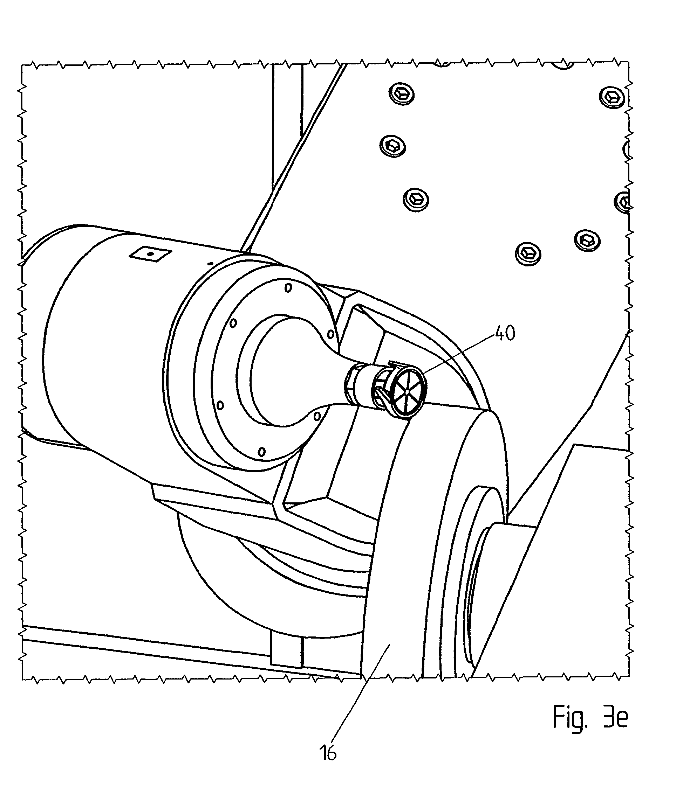

Le dispositif de l'invention consent également le meulage ou le satinage des surfaces entre les cornes 125 et 126 visibles sur la figure 2a, comme le montrent les figures 3d et 3e. Par ailleurs, le dispositif de l'invention est particulièrement adapté pour le façonnage, la finition, le meulage ou le satinage de toutes les composantes de montre comportant des surfaces quelconques, développables ou gauches, comme par exemple les carrures, les fonds de boite, les maillons de bracelets, les couronnes ou les fermoirs.

### Liste des symboles de référence utilisés

- 1: Tourelle
- 2: Unité porte-pièce
- 5: Emplacement d'usinage
- 7-10: Postes pour fixer les outils sur la tourelle (broches)
- 13: Guides (axe X)
- 16: Meule sur poste 7
- 18: Deuxième disque abrasif sur poste 8
- 20: Bande abrasive sur poste 9
- 22: Bande abrasive sur poste 10
- 28: Capot protecteur
- 40: Pièce usinée
- 42: Serrage de pièce amovible
- 44: Broche porte-serrage
- 46: Guides axe Z
- 47: Etau auto-centrant
- 48: Guides axe Y
- 49: Pince expansible coudée
- 60: Châssis de la machine
- 81: Moteur A
- 82: Equerre 45°
- 83: Moteur B
- 84: Moteur C
- 85: Equerre 45°
- 120: boite de montre
- 122: Surface gauche
- 125: Surface entre-cornes
- 126: Surface entre-cornes

## Revendications

1. Machine d'usinage et terminaison pour pièces mécaniques, comportant :
une unité de commande CNC,
une tourelle (1) avec une pluralité de postes (7-10) pour fixer différents outils de coupe et/ou de terminaison (16, 18. 20, 22),
des moyens motorisés commandés numériquement pour faire pivoter la tourelle (1), de manière à présenter un outil sélectionné parmi lesdits outils en regard d'une pièce à usiner,
une unité porte-pièce commandée numériquement pour présenter une pièce (40) à terminer en regard dudit outil sélectionné,
ladite unité porte-pièce comportant un axe linéaire ou plusieurs axes linéaires motorisés (X, Y, Z), contrôlés par ladite unité de commande CNC, et au moins trois axes rotatifs motorisés (A, B, C), chacun des trois axes rotatifs permettant une rotation continue de la pièce sous contrôle de l'unité de commande CNC, **caractérisée en ce que** lesdits au moins trois axes rotatifs motorisés comprennent un premier axe de rotation motorisé (A), un deuxième axe de rotation motorisé (B) entraîné par le premier axe de rotation (A) à travers une première équerre (83) déterminant un premier angle d'inclinaison fixe entre le premier axe de rotation (A) et le deuxième axe de rotation (B), et un troisième axe de rotation (C) entraîné par le deuxième axe de rotation (B) à travers une deuxième équerre (85) déterminant un deuxième angle d'inclinaison fixe entre ledit deuxième axe de rotation (B) et le troisième axe de rotation (C), dans laquelle lesdits trois axes de rotation (A, B, C) se coupent en un point dans l'espace.

2. Machine d'usinage et terminaison selon la revendication 1, dans laquelle au moins un desdits outils comporte une bande abrasive (20) tendue entre des moyeux.

3. Machine d'usinage et terminaison selon la revendication 1, dans laquelle au moins un des outils est constitué par une meule.

4. Machine d'usinage et terminaison selon l'une des revendications de 1 à 3, dans laquelle ladite unité porte-pièce permet de déplacer ladite pièce selon au moins deux axes linéaires (Z, Y) orthogonaux et indépendants.

5. Machine d'usinage et terminaison selon la revendication 4, dans la quelle ladite tourelle est entraînée par un troisième axe linéaire motorisé (X) orthogonal auxdites axes linéaires (Z, Y) permettant de déplacer la pièce, ledit troisième axe linéaire étant contrôlé par ladite unité de commande CNC.

6. Machine d'usinage et terminaison selon l'une des revendications de 1 à 5, dans laquelle au moins un mandrin est fixé sur un desdits postes afin d'entraîner une brosse à satiner, un feutre ou un tampon à polir.

7. Machine d'usinage et terminaison selon l'une des revendications de 1 à 6, dans laquelle au moins un desdits premiers angles d'inclinaison est fixe et le deuxième angle d'inclinaison fixe est différent de 90°.

8. Machine d'usinage et terminaison selon l'une des revendications de 1 à 7, dans laquelle lesdits au moins trois axes rotatifs motorisés comportent des moteurs de type direct-drive, et des encodeurs angulaires arrangés pour lire directement la position angulaire de l'arbre de sortie des axes rotatifs respectifs.

9. Machine d'usinage et terminaison selon l'une des revendications précédentes, dans lequel ledit troisième axe de rotation (C) un axe-broche portant à son extrémité la pièce à usiner ou un outil de coupe et pouvant, selon les instructions de l'unité de contrôle CNC, soit positionner la pièce à un angle défini, soit entrainer la pièce ou l'outil en rotation avec une vitesse de rotation définie.

10. Machine d'usinage et terminaison selon l'une des revendications de 1 à 9, dans laquelle ladite unité porte-pièce est équipée d'un système de serrage de pièce interchangeable, d'une pince expansible pneumatique pour saisir la pièce à usiner, et/ou d'un serre-pièce amovible de type System 3R (marque déposée) ou autre pour saisir la pièce à usiner.

11. Machine d'usinage et terminaison selon l'une des revendications de 1 à 10, dans laquelle ladite tourelle est entrainée par un axe de rotation motorisé contrôlé par ladite unité de contrôle CNC.

12. Procédé d'usinage et terminaison de pièces comportant une surface gauche par une machine d'usinage selon l'une des revendications précédentes, et comprenant les étapes suivantes :
positionnement de la tourelle porte-outil de manière à mettre un outil de coupe et/ou un outil de terminaison sélectionné parmi plusieurs outils sur la tourelle en regard d'une pièce à usiner;
commande, de la part de l'unité de commande CNC,
de manière à présenter la surface gauche de la pièce à l'outil.

13. Procédé selon la revendication précédente, dans lequel ladite pièce à usiner est une composante de montre.

## Claims

1. Finishing and machining machine for mechanical workpieces including:
a CNC command unit,
a turret (1) with a plurality of stations (7-10) for holding various finishing and/or machining tools, (16, 18, 20, 22),
numerically controlled motor means for turning the turret (1) such as to present a selected tool among said tools in front of a workpiece to be machined,
a numerically controlled piece holding unit for presenting a workpiece to be finished in front of said selected tool,
said piece holding unit comprising a linear motorised axis or several motorised linear axis (X, Y, Z) controlled by said CNC control unit and at least three motorised rotary axes (A, B, C), each of the three rotary axes allowing a continuous rotation of the workpiece under control of the CNC command unit, **characterised in that** said at least three motorised rotary axis comprise at least a first motorised rotary axis (A), a second motorised rotary axis (B) driven by the first rotary axis (A) via a first angle bracket determining a first fixed inclination angle between the first rotation axis (A) and the second rotation axis (B), a third rotation axis (C) driven by the second rotation axis (B) via a second angle bracket (85) determining a second fixed inclination angle between the second rotation axis (B) and the third rotation axis (C), wherein said three rotation axis (A, B, C) intersect in a point in space.

2. Finishing and machining machine according to claim 1,
wherein at least one of said tools comprises an abrasive band (20) tensioned between pulleys.

3. Finishing and machining machine according to claim 1,
wherein at least one of said tools comprises a grinding wheel.

4. Finishing and machining machine according to any of claims 1 to 3, wherein said piece holding unit allows the displacement of said workpiece according to at least two linear axis (Z, Y) orthogonal and independent.

5. Finishing and machining machine according to claim 4,
wherein said turret is driven by a third linear motorised axis (X) orthogonal to said linear axis (Z, Y) allowing the displacement of the workpiece, said third linear axis being controlled by said CNC command unit.

6. Finishing and machining machine according to any of claims 1 to 5, wherein at least a mandrel is fixed on one of said stations for driving a burnishing brush, a felt, or a buffing wheel.

7. Finishing and machining machine according to any of claims 1 to 6, wherein at least one of said inclination angles is fixed and said second inclination angle is different from 90°.

8. Finishing and machining machine according to any of claims 1 to 7, wherein said at least three motorised rotary axis comprise direct drive motors and angle encoders arranged for reading directly the angular position of the exit shaft of the corresponding rotary axis.

9. Finishing and machining machine according to any of the preceding claims, wherein said third rotary axis (C) is a spindle carrying at its extremity the workpiece to be machined or a cutting tool, and capable of, under the control of the CNC command unit, either positioning the workpiece at a determined angle or driving the workpiece or the tool in rotation at a determined revolution speed.

10. Finishing and machining machine according to any of claims 1 to 9, wherein said piece holding unit is equipped with an exchangeable piece clamping system, with an expansible vice for holding a workpiece to be machined, and/or with a removable piece holder of the type "System 3R (trade mark) or other piece holding means.

11. Finishing and machining machine according to any of claims 1 to 10, wherein said turret is driven by a motorised rotation axis controlled by said CNC command unit.

12. Method of machining and finishing workpieces comprising a skew surface by a finishing and machining machine according to any of the preceding claims, comprising the following steps:
positioning of the tool-holding turret such as to place a cutting tool and/or a finishing tool selected among a plurality of tools on the turret in face of a workpiece to be machined;
commanding, by the CNC command unit, such as to present the skew surface of hte workpiece to the tool.

13. Method according to the preceding claim in which said workpiece is a component of a watch.

## Patentansprüche

1. Eine Bearbeitungs- und Verspanmaschine für mechanische Werkstücke aufweisend:
Eine CNC Steuerungseinheit,
Ein Werkzeugrevolver (1) mit einer Mehrzahl an Halterungen (7-10) zum befestigen verschiedener Schneid- und/oder Fertigungswerkzeuge (16, 18, 20, 22),
numerisch gesteuerte Motormittel zum Drehen des Werkzeugrevolvers (1), so dass ein ausgewähltes Werkzeug unter den Werkzeugen vor dem Werkstück präsentiert wird,
eine numerisch gesteuerte Werkstückhalterungseinheit zum Präsentieren eines zu bearbeitenden Werkstücks vor dem ausgewählten Werkzeug,
besagte Werkstückhalterungseinheit aufweisend eine motorisierte lineare Achse oder mehrere motorisierte lineare Achsen (X, Y, Z) gesteuert durch die CNC Steuerungseinheit und mindestens drei motorisierte Rotationsachsen (A, B, C), wobei jede der drei Rotationsachsen eine kontinuierliche Rotation des Werkstücks gesteuert durch die CNC Steuerungseinheit erlaubt,
**dadurch gekennzeichnet, dass**
die mindestens drei motorisierten Rotationsachsen mindestens eine erste motorisierte Rotationsachse (A), eine zweite motorisierte Rotationsachse (B), die durch die erste motorisierte Rotationsachse (A) über einen ersten Stützwinkel, die einen ersten festen Neigungswinkel zwischen der ersten Rotationsachse (A) und der zweiten Rotationsachse (B) bestimmt, angetrieben wird, und eine dritte Rotationsachse (C), die durch die zweite Rotationsachse (A) über einen zweiten Stützwinkel (85), die einen zweiten festen Neigungswinkel zwischen der zweiten Rotationsachse (A) und der dritten Rotationsachse (B) bestimmt, angetrieben wird, aufweist, wobei die drei Rotationsachsen (A, B, C) sich in einem Punkt im Raum schneiden.

2. Eine Bearbeitungs- und Verspanmaschine nach Anspruch 1, wobei mindestens eines der Werkzeuge ein zwischen zwei Rollen gespanntes Schleifband (20) aufweist.

3. Eine Bearbeitungs- und Verspanmaschine nach Anspruch 1, wobei mindestens eines der Werkzeuge ein Schleifrad aufweist.

4. Eine Bearbeitungs- und Verspanmaschine nach einem der Ansprüche 1 bis 3, wobei die Werkstückhalterungseinheit die rechtwinkelige und unabhängige Verschiebung des Werkstücks in Richtung der zumindest zwei linearen Achsen (Z, Y) erlaubt.

5. Eine Bearbeitungs- und Verspanmaschine nach einem der Ansprüche 1 bis 4, wobei der Werkzeugrevolver durch eine dritte motorisierte lineare Achse (X), die rechtwinkelig zu den die Verschiebung des Werkstücks erlaubenden linearen Achsen (Z, Y) ist, angetrieben wird, wobei die dritte lineare Achse durch die CNC Steuerungseinheit gesteuert wird.

6. Eine Bearbeitungs- und Verspanmaschine nach einem der Ansprüche 1 bis 5, wobei mindestens einen Aufspannbolzen zum Antreiben einer Polierbürste, eines Filzes oder eines Polierrads in einer der Halterungen befestigt ist.

7. Eine Bearbeitungs- und Verspanmaschine nach einem der Ansprüche 1 bis 6, wobei mindestens einer der Neigungswinkel fest ist und der zweite Neigungswinkel nicht 90° ist.

8. Eine Bearbeitungs- und Verspanmaschine nach einem der Ansprüche 1 bis 7, wobei die mindestens drei motorisierten Rotationsachsen direkte Antriebsmotoren und Winkelentschlüsseler ausgebildet zum direkten Auslesen der Winkelposition der Ausgangswelle der entsprechenden Rotationsachse aufweisen.

9. Eine Bearbeitungs- und Verspanmaschine nach einem der vorhergehenden Ansprüche, wobei die dritte Rotationsachse (C) eine an ihrem Ende das zu bearbeitende Werkstück tragende Spindel oder eine Schneidwerkzeug ist, und geeignet ist, unter Kontrolle der CNC Steuerungseinheit entweder das Werkstück in einem bestimmten Winkel zu positionieren oder das Werkstück oder das Werkzeug in eine Rotation mit einer bestimmten Winkelgeschwindigkeit zu versetzen.

10. Eine Bearbeitungs- und Verspanmaschine nach einem der Ansprüche 1 bis 9, wobei die Werkstückhalterung mit einem austauschbaren Werkstückklemmsystem, mit einem erweiterbaren Schraubstock und/oder mit einem entfernbaren Werkstückhalter des Typs System 3R (Eingetragene Marke) oder anderen Werkstückhalterungsmitteln ausgerüstet ist.

11. Eine Bearbeitungs- und Verspanmaschine nach einem der Ansprüche 1 bis 10, wobei der Werkzeugrevolver durch eine durch die CNC Steuerungseinheit gesteuerte motorisierte Rotationsachse angetrieben ist.

12. Verfahren zum Bearbeiten und Verspanen von Werkstücken, die eine schiefe Oberfläche aufweisen, durch eine Bearbeitungs- und Verspanmaschine nach einem der vorhergehenden Ansprüche, aufweisend die folgenden Schritte :
Positionieren des Werkzeughaltenden Werkzeugrevolver so dass ein Schneidwerkzeug und/oder eine Bearbeitungswerkzeug, das aus einer Vielzahl von Werkzeugen ausgewählt ist, auf dem Werkzeugrevolver gegenüber dem zu bearbeitenden Werkstück positioniert wird.

13. Ein Verfahren nach dem vorhergehenden Anspruch, in dem das Werkstück eine Komponente einer Uhr ist.
